# EUROPÄISCHE PATENTANMELDUNG

(11) **EP 3 926 773 A1**
(43) Veröffentlichungstag der Anmeldung: **22.12.2021**
(21) Anmeldenummer: 20179944.2
(22) Anmeldetag: 15.06.2020
(51) Int. Cl.: H02G 3/08, A62C 3/16, A62C 2/06, H02G 3/12

(54) **DOSENEINSATZ FÜR DIE ELEKTROINSTALLATION UND/ODER ABDECKRAHMEN, BLENDE UND/ODER BETÄTIGUNGSELEMENT FÜR EINEN DOSENEINSATZ FÜR DIE ELEKTROINSTALLATION**

(71) Anmelder: f-tronic GmbH, 66131 Saarbrücken (DE)
(72) Erfinder: Fohs, Peter, 66399 Mandelbachtal (DE)
(74) Vertreter: Patentanwaltskanzlei Vièl & Wieske PartGmbB

(57) **Zusammenfassung**

Die vorliegende Erfindung betrifft in einer ersten Ausgestaltung einen Doseneinsatz (101) für die Elektroinstallation sowie in einer zweiten Ausgestaltung - alternativ zur ersten Ausgestaltung oder ergänzend zur ersten Ausgestaltung - einen Abdeckrahmen (10), eine Blende und/oder ein Betätigungselement (12) für einen Doseneinsatz (101) für die Elektroinstallation. Der Doseneinsatz (101) weist in der ersten Ausgestaltung zumindest in einem Teilbereich seiner Oberfläche (3) eine Beschichtung oder ein Element aus einem intumeszierenden Material (8, 9) auf. In der zweiten Ausgestaltung weist der Abdeckrahmen (10), die Blende und/oder das Betätigungselement (12) auf der Seite, die nach der Montage des Abdeckrahmens (10), der Blende und/oder des Betätigungselements (12) dem Doseneinsatz (101) zugewandt ist, zumindest in einem Teilbereich (11, 13) der Oberfläche eine Beschichtung oder ein Element aus einem intumeszierenden Material auf.

## Beschreibung

Die vorliegende Erfindung betrifft nach dem Oberbegriff des Anspruchs 1 in einer ersten Ausgestaltung einen Doseneinsatz für die Elektroinstallation. In einer zweiten Ausgestaltung - alternativ oder zusätzlich zur ersten Ausgestaltung betrifft die vorliegende Erfindung nach dem Oberbegriff des Anspruchs 1 einen Abdeckrahmen, eine Blende und/oder ein Betätigungselement für einen Doseneinsatz für die Elektroinstallation.

Derartige Doseneinsätze sind bekannt beispielsweise als Steckdosen oder Schalter bzw. Taster. Diese Doseneinsätze sind zum Einbau in Installationsdosen vorgesehen, die als Unterputz-Installationsdosen in die Wand eingesetzt sein können oder die als Hohlwanddosen in Öffnungen in der Beplankung von Hohlwand-Ständerkonstruktionen eingesetzt werden können. Die Doseneinsätze werden in den Installationsdosen verdrahtet, indem die Kabel in die jeweilige Installationsdose hineingeführt sind und indem die Kabel vor dem Einsetzen des Doseneinsatzes mit dem Doseneinsatz kontaktiert werden. Die Doseneinsätze können auch elektrische oder elektronische Steuer- bzw. Regelelemente sein. Diese Steuer- bzw. Regelelemente können noch ein oder mehrere Betätigungselemente aufweisen oder auch so ausgestaltet sein, dass sich diese nach deren Montage vollständig im Inneren der Installationsdose befinden. Die Installationsdose ist dann mit einem Abdeckelement flächenbündig zu der Wand abgeschlossen, in der die Installationsdose montiert ist.

Soweit sich die Doseneinsätze nach der Montage nicht vollständig im Inneren der Installationsdose befinden, ist es üblich, eine Blende und/oder ein Betätigungselement vorzusehen sowie ggf. noch einen Abdeckrahmen. Diese Elemente können der Form nach in einem bestimmten Design gestaltet werden. Außerdem können diese Elemente in unterschiedlichen Farben angeboten werden.

Eine Steckdose ist so aufgebaut, dass der Doseneinsatz ein Steckdoseneinsatz ist, der eine Blende aus Kunststoff aufweist.

Ein Schalter oder Taster ist so aufgebaut, dass der Doseneinsatz ein Schaltereinsatz oder ein Tastereinsatz ist, der jeweils ein Betätigungselement aufweist. Das Betätigungselement ist eine Kunststofffläche, die kippbeweglich an dem Schaltereinsatz oder dem Tastereinsatz befestigbar ist. Die Schalter oder Taster können beispielsweise zum Ein- bzw. Ausschalten von Beleuchtungselementen verwendet werden.

Ein Steuer- bzw. Regelelement kann so aufgebaut sein, dass dieses als Abdeckung eine Blende aufweist, in die mehrere Betätigungselemente als Schalter, Taster oder auch Dreh- bzw. Schieberegler integriert sein können. Derartige Steuer- bzw. Regelelemente können beispielsweise für die Betätigung von Rollläden oder Markisen verwendet werden oder auch für andere Steuer- bzw. Regelaufgaben im häuslichen Bereich wie beispielsweise die Betätigung von Heizungs- bzw. Klimaanlagen.

Die Hersteller derartiger Installationsmaterialien bieten sogenannte Schalterprogramme an. Sollen beispielsweise mehrere Steckdosen oder mehrere Schalter bzw. Taster nebeneinander angeordnet werden, werden die Installationsdosen in genormten Abständen montiert. Dann werden die Doseneinsätze in die Installationsdosen montiert. Zu den Doseneinsätzen gibt es dann nicht nur die Blenden bzw. Betätigungselemente, sondern zusätzlich noch Abdeckrahmen. Diese Abdeckrahmen sind in unterschiedlicher Größe erhältlich. Die Größe der Abdeckrahmen hängt davon ab, wie viele Doseneinsätze nebeneinander montiert werden sollen. Nach dem Montieren der Doseneinsätze wird der jeweilige Abdeckrahmen angelegt und mit dem Befestigen der Blenden bzw. Betätigungselemente für die Doseneinsätze befestigt. Es ist dabei auch möglich, in eine Reihe nebeneinander angeordneter Installationsdosen sowohl Schalter bzw. Taster als auch Steckdosen als auch Steuer- bzw. Regelelemente anzubringen.

Bei der Elektroinstallation stellt sich unter bestimmten Randbedingungen das Problem des Brandschutzes. Dabei soll verhindert, dass das Übergreifen eines Brandes oder auch die Ausbreitung von Rauchgas bei einem Brand von einem Raum in einen benachbarten Raum durch die Elektroinstallation begünstigt wird. In diesem Zusammenhang können die Installationsdosen eine Schwachstelle bilden, weil dort die Wand (bei Massivbauweise) bzw. die Hohlwand hinsichtlich der Brandschutzwirkung geschwächt ist.

Es ist deswegen bekannt, in der Hohlwandinstallation sowie auch in der Installation bei vergleichsweise dünnen Wänden in Massivbauweise sogenannte Brandschutzdosen als Installationsdosen vorzusehen. Die Wände dieses Installationsdosen können mehrschichtig aufgebaut sein. Eine dieser Schichten besteht dabei aus einem Material oder einer Materialzusammensetzung mit intumeszierender Wirkung. Die intumeszierende Wirkung bedeutet, dass sich das entsprechende Material bei Erwärmung sehr stark ausdehnt. Diese Ausdehnung setzt bereits bei Temperaturen ein, die unter der Temperatur liegen, die bei einem ausgebildeten Brand vorherrscht. Durch die Ausdehnung des intumeszierenden Materials lassen sich die Öffnungen in den Wänden abdichten, die durch die Elektroinstallation vorhanden sind. Durch diese Abdichtung wird die Ausbreitung von Rauchgasen sowie das Übergreifen eines Brandes von einem Raum in einen anderen deutlich erschwert und damit zumindest verzögert.

Der vorliegenden Erfindung liegt die Aufgabe zu Grunde, eine alternative Lösung für einen Brandschutz vorzuschlagen.

Diese Aufgabe wird nach der vorliegenden Erfindung gemäß Anspruch 1 gelöst. Die Lösung nach Anspruch 1 setzt dort an, dass das intumeszierende Material nicht an den Installationsdosen angebracht wird, sondern an den Einbaugeräten (Doseneinsätzen), die in den Installationsdosen montiert werden sollen.

Dies erweist sich insofern als vorteilhaft, weil damit die Installationsdosen einheitlich hergestellt und verwendet werden können. Auch bei baulichen Gegebenheiten, bei denen besondere Anforderungen an den Brandschutz bestehen, müssen keine besonderen Installationsdosen verwendet werden. Damit wird die Herstellung der Installationsdosen günstig, weil diese einheitlich in größerer Stückzahl hergestellt werden können. Es ist nicht notwendig, für besondere Anforderungen des Brandschutzes besondere Ausgestaltungen von Installationsdosen (in dann geringerer Stückzahl) herzustellen.

In einer ersten Ausgestaltung gemäß Anspruch 1 weist der Doseneinsatz zumindest in einem Teilbereich seiner Oberfläche eine Beschichtung oder ein Element aus einem intumeszierenden Material auf.

Es ist damit möglich, intumeszierendes Material in das Innere einer Installationsdose einzubringen. Dies erweist sich insofern als vorteilhaft, weil damit im Brandfall (d.h. bei einer Erwärmung) der Hohlraum, der durch die Installationsdose gebildet wird, durch das intumeszierende Material sehr wirksam ausgefüllt wird. Bei der Temperatur, bei der die intumeszierende Wirkung des Materials einsetzt, ist der Kunststoff, aus dem die Installationsdose gebildet ist (überwiegend PP) noch insoweit formstabil, als dass die Wände der Installationsdose eine Begrenzung für die Ausdehnung des intumeszierenden Materials bilden. Das intumeszierende Material stützt sich beim Ausdehnen damit an dem Doseneinsatz und der Installationsdose ab. Der Doseneinsatz ist an der Installationsdose befestigt. Damit erfolgt die Ausdehnung des intumeszierenden Materials sehr effizient in dem Volumen der Installationsdose.

Das intumeszierende Material kann als Beschichtung auf dem Doseneinsatz angeformt sein.

Es ist auch möglich, an dem Doseneinsatz Befestigungsmittel vorzusehen. Diese Befestigungsmittel sind so ausgestaltet, dass sie mit Gegenmitteln an einem Formkörper aus intumeszierendem Material so zusammenwirken, dass der Formkörper aus intumeszierendem Material an dem Doseneinsatz befestigbar ist. Hierzu wird auch auf Anspruch 2 verwiesen.

Die Befestigungsmittel können beispielsweise als Tasche in der Oberfläche des Doseneinsatzes ausgebildet sein. Die Gegenmittel des Formkörpers bestehen dann darin, dass die äußere Form des Formkörpers so gestaltet ist, dass dieser in die Tasche eingesteckt werden kann.

Die Befestigungsmittel können beispielsweise auch als Befestigungslaschen ausbildet sein. Die äußere Form des Formkörpers ist dann so ausgestaltet, dass der Formkörper mittels der Befestigungslaschen an dem Doseneinsatz befestigbar ist.

Üblicherweise weisen die Doseneinsätze eine bestimmte strukturierte Form der Oberfläche auf. Dies gilt zumindest dann, wenn diese Doseneinsätze Steckdosen oder Schalter bzw. Taster sind. Die Befestigungsmittel können dann insoweit durch die strukturierte Form der Oberfläche gebildet werden, als dass die Gegenmittel des Formkörpers darin bestehen, dass der Formkörper in seinen Abmessungen so gestaltet ist, dass er weitestgehend passgenau formschlüssig in einem Teilbereich der Oberfläche des Doseneinsatzes in diese strukturierte Form der Oberfläche eingedrückt werden kann.

In einer zweiten Ausgestaltung gemäß Anspruch 1 weist - alternativ oder zusätzlich zu der Lösung nach der ersten Ausgestaltung - der Abdeckrahmen, die Blende und/oder das Betätigungselement auf der Seite, die nach der Montage des Abdeckrahmens, der Blende und/oder des Betätigungselements dem Doseneinsatz zugewandt ist, zumindest in einem Teilbereich der Oberfläche eine Beschichtung oder ein Element aus einem intumeszierenden Material auf.

Diese zweite Ausgestaltung spielt vor allen Dingen dann eine Rolle, wenn der Doseneinsatz nicht vollständig im Inneren der Installationsdose eingebracht wird. Dies ist beispielsweise bei Steckdosen, Schaltern, Tastern sowie Steuer- bzw. Regelelementen der Fall, soweit diese Steuer- bzw. Regelelemente wenigstens ein Bedienelement aufweisen.

Es ist auch mit dieser zweiten Ausgestaltung möglich, im Falle eines Brandes (d.h.: einer Erwärmung) intumeszierendes Material in das Innere einer Installationsdose einzubringen, so dass auch bei dieser zweiten Ausgestaltung im Falle eines Brandes der Hohlraum, der durch die Installationsdose gebildet wird, durch das intumeszierende Material sehr wirksam ausgefüllt wird. Bei der Temperatur, bei der die intumeszierende Wirkung des Materials einsetzt, ist der Kunststoff, aus dem die Installationsdose gebildet ist (überwiegend PP) noch insoweit formstabil, als dass die Wände der Installationsdose eine Begrenzung für die Ausdehnung des intumeszierenden Materials bilden. Das intumeszierende Material stützt sich beim Ausdehnen damit an dem Doseneinsatz und dem Abdeckrahmen, die Blende und/oder dem Betätigungselement ab. Die Installationsdose ist mit dem Doseneinsatz verbunden und daran befestigt. Der Abdeckrahmen, die Blende und/oder das Betätigungselement sind wiederum mit dem Doseneinsatz verbunden und daran befestigt. Damit sind auch der Abdeckrahmen, die Blende und/oder das Betätigungselement mit der Installationsdose verbunden. Damit erfolgt die Ausdehnung des intumeszierenden Materials sehr effizient in dem Volumen der Installationsdose zwischen dem Abdeckrahmen, der Blende und/oder dem Betätigungselement sowie der Installationsdose. Die Doseneinsätze füllen die Installationsdose üblicherweise nicht vollständig aus, so dass sich das intumeszierende Material bei einer Erwärmung in das Innere der Installationsdose hinein ausdehnt.

Das intumeszierende Material kann als Beschichtung auf dem Abdeckrahmen, der Blende und/oder dem Betätigungselement angeformt sein.

Es ist auch möglich, an dem Abdeckrahmen, der Blende und/oder dem Betätigungselement Befestigungsmittel vorzusehen. Dieses Befestigungsmittel sind so ausgestaltet, dass sie mit Gegenmitteln an einem Formkörper aus intumeszierendem Material so zusammenwirken, dass der Formkörper aus intumeszierendem Material an dem Abdeckrahmen, der Blende und/oder dem Betätigungselement befestigbar ist. Auch für die zweite Ausgestaltung wird für diese Ausführungsform auf Anspruch 2 verwiesen.

Die Befestigungsmittel können beispielsweise als Tasche in der Oberfläche des Abdeckrahmens, der Blende und/oder des Betätigungselementes ausgebildet sein.

Die Gegenmittel des Formkörpers bestehen dann darin, dass die äußere Form des Formkörpers so gestaltet ist, dass dieser in die Tasche eingesteckt werden kann.

Die Befestigungsmittel können beispielsweise auch als Befestigungslaschen ausbildet sein. Die äußere Form des Formkörpers ist dann so ausgestaltet, dass der Formkörper mittels der Befestigungslaschen an dem Abdeckrahmen, der Blende und/oder dem Betätigungselement befestigbar ist.

Üblicherweise weisen der Abdeckrahmen, die Blende und/oder das Betätigungselement eine bestimmte strukturierte Form der Oberfläche auf. Die Befestigungsmittel können dann insoweit durch die strukturierte Form der Oberfläche gebildet werden, als dass die Gegenmittel des Formkörpers darin bestehen, dass der Formkörper in seinen Abmessungen so gestaltet ist, dass er weitestgehend passgenau formschlüssig in einem Teilbereich der Oberfläche des Abdeckrahmens, der Blende und/oder des Betätigungselementes in diese strukturierte Form der Oberfläche eingedrückt werden kann.

Bei der zweiten Ausgestaltung erweist es sich gegenüber der ersten Ausgestaltung als Vorteil, dass die Abdeckrahmen, Blenden und/oder Betätigungselemente, die eine Beschichtung aus intumeszierendem Material aufweisen oder die für die Befestigung eines Formkörpers aus intumeszierendem Material vorgesehen sind, mit einer Kennzeichnung versehen werden können, die bei fertiggestellter Montage sichtbar ist. Soll beispielsweise eine Prüfung der baulichen Gegebenheiten des Brandschutzes durchgeführt werden, kann bei einer Begehung der Räumlichkeiten in einfacher Weise durch eine Besichtigung festgestellt werden, ob bei der Elektroinstallation Materialien verbaut wurden, die den Anforderungen an den Brandschutz entsprechen. Diese Kennzeichnung kann erfolgen durch eine Kennzeichnung des Abdeckrahmens, der Blende und/oder des Betätigungselementes auf deren Sichtseite, die die sichtbare Oberfläche nach Abschluss der Elektroinstallationsarbeiten bildet. Die Prüfung der baulichen Gegebenheiten des Brandschutzes kann damit erfolgen, ohne dass Teile der Elektroinstallation demontiert werden müssen, um zu prüfen, ob das Installationsmaterial verwendet wurde, das den Anforderungen des Brandschutzes entspricht.

Sowohl bei der ersten Ausgestaltung als auch bei der zweiten Ausgestaltung erweist sich die Ausführungsform als vorteilhaft, bei der das intumeszierende Material aus einem Formkörper besteht, der an dem Doseneinsatz und /oder dem Abdeckrahmen, der Blende und/oder dem Betätigungselement angebracht wird. Vorteilhaft können hierbei die entsprechenden Teile der Elektroinstallation zunächst einheitlich und unabhängig von besonderen Installationsbedingungen, die sich aus dem Brandschutz ergeben. Damit ergibt sich eine größere Stückzahl der entsprechenden Teile, so dass sowohl die Herstellung als auch die Logistik in Form der Lager- und Vorratshaltung vereinfacht wird. Wenn die entsprechenden Anforderungen an den Brandschutz bestehen, können die Formkörper aus dem intumeszierenden Material bei der Durchführung der Elektroinstallationsarbeiten ergänzt werden.

Anspruch 2 betrifft einen Doseneinsatz für die Elektroinstallation und/oder einen Abdeckrahmen, eine Blende und/oder ein Betätigungselement für einen Doseneinsatz für die Elektroinstallation in einer der Ausgestaltungen nach Anspruch 1. Der Doseneinsatz und/oder der Abdeckrahmen, die Blende und/oder das Betätigungselement weisen auf der Oberfläche Befestigungsmittel auf, die mit Gegenmitteln zu diesen Befestigungsmitteln zusammenwirken, die an einem Formkörper aus intumeszierendem Material angebracht sind.

Die Ausgestaltung des Anspruchs 2 wurde bereits im Zusammenhang mit den Ausführungen zu Anspruch 1 mit erläutert.

Anspruch 3 betrifft einen Doseneinsatz für die Elektroinstallation und/oder einen Abdeckrahmen, eine Blende und/oder ein Betätigungselement für einen Doseneinsatz für die Elektroinstallation gemäß der Ausführungsform nach Anspruch 2. Hierbei ist ein Sichtfenster vorhanden, durch das sichtbar ist, ob ein Formkörper aus intumeszierendem Material angebracht ist.

Diese Ausgestaltung ist insofern vorteilhaft, weil damit zunächst die Teile für die Elektroinstallation einheitlich und unabhängig von Anforderungen des Brandschutzes in größerer Stückzahl hergestellt werden können. Wenn Anforderungen seitens des Brandschutzes, kann das intumeszierende Material zusätzlich angebracht werden.

Mit der Ausgestaltung nach Anspruch 3 bleibt damit auch bei einer fertig gestellten Elektroinstallation sichtbar, ob das intumeszierende Material bei der Elektroinstallation mit verbaut wurde, wenn dies aus Brandschutzgründen vorgeschrieben ist. Durch diese Ausgestaltung kann bei einer Prüfung des Brandschutzes bei einer Begehung von Räumlichkeiten wieder in einfacher Weise und ohne (teilweise) Deinstallation der Elektroinstallation überprüft werden, ob die Anforderungen des Brandschutzes bei der Elektroinstallation eingehalten wurden.

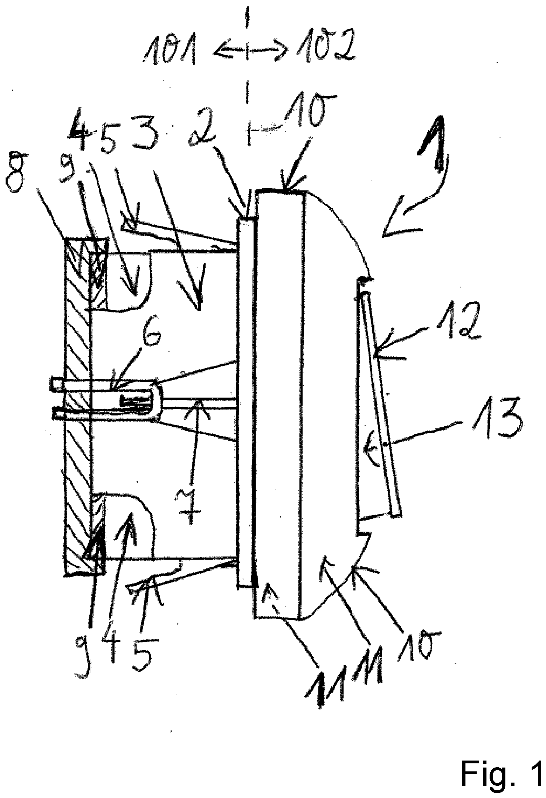

Die Figur zeigt ein Ausführungsbeispiel der vorliegenden Erfindung in Form eines Schalters 1. Mit der Bezugsziffer 1 ist gemeinsam der Doseneinsatz 101 des Schalters 1 bezeichnet sowie die Teile 102, die durch den Abdeckrahmen 10 und das Betätigungselement 12 gebildet werden.

Der Doseneinsatz 101 besteht aus einer Wandplatte 2, die nach dem Einsetzen des Doseneinsatzes 101 in eine Installationsdose den Rand der Installationsdose umgibt und auf der Außenseite der Wand anliegt, in der die Elektroinstallation vorgenommen wird. Mit der Wandplatte 2 sind die Teile des Doseneinsatzes 101 verbunden, die sich nach der Installation im Inneren der Installationsdose befinden. Es handelt sich hierbei um das Funktionsteil 3. In dieses Funktionsteil sind konstruktiv die Bauteile integriert, die für die Funktion im elektronischen bzw. elektrotechnischen Sinn benötigt werden. Dieses Funktionsteil 3 weist eine Oberfläche auf, die eine strukturierte Form hat. In diese strukturierte Form sind beispielsweise Ausnehmungen 4 eingelassen. In diesen Ausnehmungen 4 sind Kabelanschlusselemente vorgesehen. Diese bestehen üblicherweise aus Federklemmen. Diese Federklemmen erlauben ein Einschieben einer Ader eines Kabels in die Federklemme derart, dass diese Ader nach dem Einschieben durch die Federklemme gegen ein Herausziehen gehalten wird. Diese Federklemmen können mittels der Betätigungselemente 5 gelöst werden, wenn eine Ader eines Kabels wieder herausgezogen werden soll.

Es ist zu sehen, dass auf diesem Doseneinsatz 101 ein Formkörper 8, 9 angebracht ist. Dieser Formkörper ist der äußeren Form des Funktionsteils 3 angepasst, so dass der Formkörper 8, 9 auf das Funktionsteil 3 des Doseneinsatzes 101 aufgesteckt werden kann und dort formschlüssig gehalten wird. Es ist zu sehen, dass der Formkörper 8, 9 das Funktionsteil 3 in dessen Randbereich umgreift. Außerdem greifen die Bestandteile 9 des Formkörpers 8, 9 in die Ausnehmungen 4 in dem Funktionsteil 3 ein.

Dieser Formkörper 8, 9 besteht aus einem intumeszierenden Material.

Anstelle des Formkörpers 8, 9 kann das intumeszierende Material auch als Beschichtung aufgebracht werden.

Der Doseneinsatz 101 weist außerdem noch Halteklammern 6 auf. Diese Halteklammern weisen ein Gewinde auf, durch das eine Schraube 7 durchgeführt ist. Diese Schraube 7 befindet sich nach der Montage des Doseneinsatzes 101 im Inneren der Installationsdose. Der Kopf der Schraube 7 ist dabei durch die Wandplatte 2 hindurch betätigbar. Dadurch können diese Spreizkrallen nach dem Einsetzen des Doseneinsatzes in die Installationsdose ausgefahren werden, so dass diese durch die Wand der Installationsdose hindurch den Doseneinsatz 101 an der Wand festklemmen. Diese Halteklammern 6 werden bei der sogenannten Unterputzmontage in massiven Wänden verwendet. Für die Montage bei Hohlwandinstallationen werden diese Halteklammern 6 nicht verwendet. Dazu befinden sich Ausnehmungen in der Wandplatte, durch die der Doseneinsatz mittels Halteschrauben, die in Bohrungen in der Installationsdose in deren Randbereich eingreifen, verschraubt werden kann.

Außer dem Doseneinsatz 101 ist in der Darstellung der Figur noch ein Abdeckrahmen 10 dargestellt sowie ein Betätigungselement 12. Durch die Bezugsziffern 11 und 13 wird angezeigt, dass sich das intumeszierende Material (als Formkörper oder auch als Beschichtung) auch auf der Innenseite des Abdeckrahmens 10 und/oder des Betätigungselementes 12 befinden kann.

## Patentansprüche

1. Doseneinsatz (101) für die Elektroinstallation und/oder Abdeckrahmen (10), Blende und/oder Betätigungselement (12) für einen Doseneinsatz (101) für die Elektroinstallation,
**dadurch gekennzeichnet**,
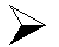 dass der Doseneinsatz (101) zumindest in einem Teilbereich seiner Oberfläche (3) eine Beschichtung oder ein Element aus einem intumeszierenden Material (8, 9) aufweist
und/oder
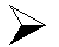 dass der Abdeckrahmen (10), die Blende und/oder das Betätigungselement (12) auf der Seite, die nach der Montage des Abdeckrahmens (10), der Blende und/oder des Betätigungselements (12) dem Doseneinsatz (101) zugewandt ist, zumindest in einem Teilbereich (11, 13) der Oberfläche eine Beschichtung oder ein Element aus einem intumeszierenden Material aufweist.

2. Doseneinsatz (101) für die Elektroinstallation und/oder Abdeckrahmen (10), Blende und/oder Betätigungselement (12) für einen Doseneinsatz (101) für die Elektroinstallation nach Anspruch 1,
**dadurch gekennzeichnet, dass** der Doseneinsatz (101) und/oder der Abdeckrahmen (10), die Blende und/oder das Betätigungselement (12) auf der Oberfläche Befestigungsmittel aufweisen, die mit Gegenmitteln zu diesen Befestigungsmitteln zusammenwirken, die an einem Formkörper (8, 9) aus intumeszierendem Material angebracht sind.

3. Doseneinsatz (101) für die Elektroinstallation und/oder Abdeckrahmen (10), Blende und/oder Betätigungselement (12) für einen Doseneinsatz (101) für die Elektroinstallation nach Anspruch 2,
**dadurch gekennzeichnet, dass** ein Sichtfenster vorhanden ist, durch das sichtbar ist, ob ein Formkörper (8, 9) aus intumeszierendem Material angebracht ist.
